# EUROPÄISCHE PATENTSCHRIFT

(11) **EP 2 068 031 B1**
(45) Veröffentlichungstag und Bekanntmachung des Hinweises auf die Patenterteilung: **12.03.2014**
(21) Anmeldenummer: 08167213.1
(22) Anmeldetag: 22.10.2008
(51) Int. Cl.: F16D 48/06

(54) **Verfahren zur Steuerung eines Kraftfahrzeugs mit automatisierter Kupplung**
Method for controlling a motor vehicle with automatic clutch
Procédé destiné à la commande d'un véhicule automobile doté d'un embrayage automatisé

(30) Priorität: 06.12.2007 DE 102007055722
(43) Veröffentlichungstag der Anmeldung: 10.06.2009
(73) Patentinhaber: ZF Friedrichshafen AG, 88038 Friedrichshafen (DE)
(72) Erfinder: Walser, Michael, 88046 Friedrichshafen (DE); Jäger, Thomas, 88074 Meckenbeuren (DE); Schneider, Florian, 88161 Lindenberg (DE)

(56) Entgegenhaltungen:
- DE-A1- 3 934 628
- DE-A1- 10 038 379
- DE-A1-102004 003 946
- US-A1- 2005 130 799

## Beschreibung

Die Erfindung betrifft ein Verfahren zur Steuerung eines Kraftfahrzeugs mit automatisierter Kupplung nach der im Oberbegriff von Anspruch 1 näher definierten Art.

Bei Kraftfahrzeugen, insbesondere Nutzkraftfahrzeugen, mit automatisiertem Getriebe werden häufig Betätigungsmittel eingesetzt, mit denen verschiedene Betriebsarten des Kraftfahrzeugs auswählbar sind, wie beispielsweise "Fahren", "Neutral", "Parken" oder "Rangieren" bzw. "Kriechen". Durch die Wahl der Betriebsart "Rangieren" bzw. "Kriechen" wird es dem Fahrer ermöglicht, die Getriebesteuerung in einen Betriebsmodus zu versetzen, in dem die Kupplung besonders sanft betätigt werden kann. Auch kann in diesem Betriebsmodus ein Antriebsmotor des Kraftfahrzeugs, beispielsweise ein Verbrennungsmotor, derart angesteuert werden, dass eine Änderung des Antriebsstrangmomentes nur mit kleinen Drehmoment- bzw. Drehzahl-Gradienten erfolgt.

In der DE 101 05 749 A1 wird ein Verfahren für ein erleichtertes Rangieren in einem Nutzfahrzeug offenbart. Das Nutzfahrzeug umfasst ein automatisiertes Schaltgetriebe und eine automatisierte Kupplung sowie eine Schalteinrichtung. Mit der Schalteinrichtung, beispielsweise einem Drehschalter, können die Fahrzeugbetriebszustände Vorwärtsfahrt "D", Neutral "N" und Rückwärtsfahrt "R" sowie Rangierschaltungen "RM, DM" oder eine Rangierhilfe "RMB, DMB" ausgewählt werden. Bei aktivierter Rangierhilfe werden in Abhängigkeit von der Stellung des Fahrpedals und dem Beladungszustand des Fahrzeugs, die Kupplung und die Betriebsreibungsbremse gleichzeitig und aufeinander abgestimmt automatisch betätigt.

In der DE 100 16 582 A1 ist ein Kraftfahrzeug offenbart, welches ein Getriebe, eine automatisierte Kupplung, eine Steuereinrichtung, ein Gaspedal, ein Bremspedal und ein Betätigungsmittel aufweist, das zur Aktivierung eines Kriechvorganges ausgelöst wird. Aus der DE 100 16 582 A1 sind bereits verschiedenartige Ausgestaltungen des Betätigungsmittels bekannt, mit welchen ein Kriechvorgang auslösbar ist. Beispielsweise kann dieses Betätigungsmittel als manuell zu betätigender Drehschalter ausgebildet sein, welcher zusätzlich zu den üblichen Stellungen für die Fahrstufen des automatischen Getriebes zwei weitere Stellungen dauerhaft einnehmen kann, in denen entweder bei Vorwärtsfahrt oder bei Rückwärtsfahrt der Kriechmodus eingeschaltet werden kann.

Als Stand der Technik werden inbesondere die US-2005/130799A1, DE-3934628A1, DE-10038379 A1 und DE-102004003946 A1 angesehen.

In der Betriebsart "Rangieren" bzw. "Kriechen" werden Kupplung und/oder Antriebsmotor durch eine vom Fahrzeugführer vorgegebene Fahr- bzw. Gaspedalstellung angesteuert. Beispielsweise kann in der Betriebsart "Rangieren" bzw. "Kriechen" die Fahr- bzw. Gaspedalauslenkung so angepasst werden, dass in der Betriebsart "Rangieren" bzw. "Kriechen" ein größerer Betätigungswinkel für eine entsprechende Einspritzmenge zugelassen wird als in der Betriebsart "Fahren". Das Kraftfahrzeug kann somit in der Betriebsart "Rangieren" bzw. "Kriechen" bei gleichem Verstellwinkel des Fahr- bzw. Gaspedals mit einer geringeren Geschwindigkeit bewegt werden. Wird das Kraftfahrzeug in der Betriebsart "Rangieren" bzw. "Kriechen" betrieben und mittels des Betätigungsmittels in die Betriebsart "Fahren" gewechselt, so kann dies zu einer Fahrzeugbeschleunigung führen, ohne dass der Fahrzeugführer die Position des Fahr- bzw. Gaspedals verändert, da die Kupplung und/oder der Antriebsmotor nicht mehr so sanft angesteuert werden wie in der Betriebsart "Rangieren" bzw. "Kriechen".

Ein entsprechendes Verhalten ist bei einer Betätigung des Betätigungsmittels von der Betriebsart "Fahren" in die Betriebsart "Rangieren" bzw. "Kriechen" zu beobachten. Wird das Kraftfahrzeug in der Betriebsart "Fahren" betrieben und mittels des Betätigungsmittels in die Betriebsart "Rangieren" bzw. "Kriechen" gewechselt, so wird das Antriebsstrangmoment gemäß der Betriebsart "Rangieren" bzw. "Kriechen" reduziert. Dies wiederum kann in Situationen wie beispielsweise beim Fahren bzw. Anfahren in einer Steigung dazu führen, dass das Fahrzeug aufhört zu beschleunigen. In Extremsituationen ist es sogar möglich, dass aufgrund des Betriebsartwechsels von "Fahren" nach "Rangieren" bzw. "Kriechen" das Fahrzeug zurückrollt, ohne dass der Fahrer den Fahrpedalwinkel des Fahr- bzw. Gaspedals verändert hat.

Ähnlich verhält es sich bei einem Anfahrvorgang, wenn das Betätigungsmittel zur Auswahl einer Betriebsart des Kraftfahrzeugs auf der Betriebsart "Neutral" steht und der Fahrzeugführer das Fahr- bzw. Gaspedal betätigt und anschließend das Betätigungsmittel auf eine andere Betriebsart stellt, also einen Gang auswählt. Diese Situation führt zum Schließen der Kupplung, ohne dass eine Änderung der Fahrpedalposition durch den Fahrzeugführer erfolgt, wodurch ein ungewolltes Anfahren des Kraftfahrzeugs erfolgen kann.

In einem Kraftfahrzeug mit automatisierter Kupplung kann ein Fahrzeugführer eine Kupplungsbetätigung üblicherweise nur über das Fahr- bzw. Gaspedal oder das Bremspedal beeinflussen. Eine Ansteuerung der Kupplung aufgrund einer zuvor beschriebenen Situation führt daher zu einem unerwarteten Schließen bzw. Öffnen der Kupplung, wodurch sicherheitskritische Fahrsituationen entstehen können, da bei den zuvor beschriebenen Situationen vom Fahrzeugführer weder das Fahr- bzw. Gaspedal noch das Bremspedal merklich betätigt werden.

Der vorliegenden Erfindung liegt die Aufgabe zugrunde, ein Verfahren zur Steuerung eines Kraftfahrzeugs mit automatisierter Kupplung darzustellen, durch welches die Nachteile des Standes der Technik minimiert bzw. beseitigt werden und durch welches eine sichere Betriebsweise der automatisierten Kupplung ermöglicht wird.

Die der Erfindung zugrunde liegende Aufgabe wird durch ein, auch die kennzeichnenden Merkmale des Hauptanspruchs aufweisendes, gattungsgemäßes Verfahren zur Steuerung eines Kraftfahrzeugs mit automatisierter Kupplung gelöst.

Die Erfindung geht aus von einem Verfahren zur Steuerung eines Kraftfahrzeugs, insbesondere eines Nutzfahrzeugs wie beispielsweise Lastkraftwagen, Baustellenfahrzeuge oder Busse, mit einem Automatgetriebe, also einem automatischen oder einem automatisierten Getriebe, mit einer automatisierten Kupplung, einer Steuereinrichtung, einem Fahr- bzw. Gaspedal, einem Element zum Bestimmen der Fahrpedalposition und einem Betätigungsmittel zur Auswahl einer Betriebsart des Kraftfahrzeugs.

Erfindungsgemäß ist vorgesehen, dass bei einer Betätigung des Betätigungsmittels zur Auswahl einer Betriebsart des Kraftfahrzeugs die Position des Fahr- bzw. Gaspedals überwacht bzw. ausgewertet wird und dass eine Ansteuerung der Kupplung solange verhindert wird, bis eine Änderung der Fahrpedalposition erkannt wird.

In einer vorteilhaften Ausgestaltung des erfindungsgemäßen Verfahrens wird bei einer Betätigung des Betätigungsmittels von der Betriebsart "Rangieren" bzw. "Kriechen" in die Betriebsart "Fahren" die Kupplung erst dann weiter geschlossen, wenn durch das Element, welches die Fahr- bzw. Gaspedalposition erfasst, eine Änderung der Fahr- bzw. Gaspedalposition festgestellt wird. Somit kann eine ungewollte Fahrzeugbeschleunigung bei einem Wechsel von der Betriebsart "Rangieren" bzw. "Kriechen" in die Betriebsart "Fahren" aufgrund einer feineren bzw. sanfteren Ansteuerung der Kupplung in der Betriebsart "Rangieren" bzw. "Kriechen" sicher verhindert werden.

In einer weiteren Ausgestaltung des erfindungsgemäßen Verfahrens wird bei einer Betätigung des Betätigungsmittels von der Betriebsart "Fahren" in die Betriebsart "Rangieren" bzw. "Kriechen" die Kupplung erst dann weiter geöffnet, wenn durch das Element, welches die Fahr- bzw. Gaspedalposition erfasst, eine Änderung der Fahr- bzw. Gaspedalposition festgestellt wird. Somit wird das Antriebsstrangmoment durch eine Ansteuerung der Kupplung erst dann verändert, wenn durch das Element, welches die Fahr- bzw. Gaspedalposition erfasst, eine Änderung der Fahr- bzw. Gaspedalposition festgestellt wird.

In einer bevorzugten Ausgestaltung des erfindungsgemäßen Verfahrens wird beim Einlegen eines Ganges aus der Neutralposition heraus, also bei einer Betätigung des Betätigungsmittels von der Betriebsart "Neutral" in die Betriebsart "Fahren" oder "Rangieren" bzw. "Kriechen", die Kupplung erst dann angesteuert und somit weiter geschlossen, wenn durch das Element, welches die Fahr- bzw. Gaspedalposition erfasst, eine Änderung der Fahr- bzw. Gaspedalposition festgestellt wird. Wenn der Fahrzeugführer in der Neutralposition des Getriebes das Fahr- bzw. Gaspedal betätigt und dann mittels des Betätigungsmittels auf eine andere Betriebsart wechselt, wird eine Ansteuerung der Kupplung erst dann ausgeführt, wenn sich der Fahr- bzw. Gaspedalwinkel signifikant ändert, bevorzugt in Richtung größere Fahrpedalwinkel.

Unter der Betriebsart "Fahren" wird bei der vorliegenden Erfindung sowohl der "Vorwärtsfahrbereich" als auch der "Rückwärtsfahrbereich" verstanden.

Das Betätigungsmittel zur Auswahl der Betriebsart des Kraftfahrzeugs kann beispielsweise als Drehschalter ausgebildet sein und mit der Steuereinrichtung des Kraftfahrzeugs in Verbindung stehen. Ein solcher Drehschalter kann beispielsweise an einem Fahrschalter des Kraftfahrzeugs angeordnet sein, welcher zur Abgabe von manuellen Eingriffen des Fahrzeugführers vorgesehen und mit der Steuereinrichtung verbunden ist.

Das Element zur Bestimmung der Fahr- bzw. Gaspedalposition kann beispielsweise als ein am Fahr- bzw. Gaspedal angeordneter Sensor ausgebildet sein, mit welchem die Fahrpedalposition bzw. der Fahrpedalwinkel des Fahr- bzw. Gaspedals erfasst wird.

Durch das Überwachen bzw. Auswerten der Fahr- bzw. Gaspedalposition bei einer Betätigung des Betätigungsmittels zur Auswahl einer Betriebsart des Kraftfahrzeugs kann somit eine sicherheitskritische Fahrsituation, welche durch eine ungewollte Kupplungsbetätigung entstehen würde, sicher verhindert werden, da eine Ansteuerung der Kupplung bei einer Betätigung des Betätigungsmittels unterbunden wird, solange der Fahrzeugführer die Fahr- bzw. Gaspedalposition nicht merklich verändert.

Im Folgenden wird das Grundprinzip der Erfindung, welche mehrere Ausführungsformen zulässt, an Hand einer Zeichnung beispielhaft näher erläutert.

Es zeigen:
- Fig. 1: eine schematische Darstellung eines Fahrzeugs mit automatisiertem Getriebe,
- Fig. 2: einen Fahrschalter und
- Fig. 3: einen Drehschalter am Fahrschalter.

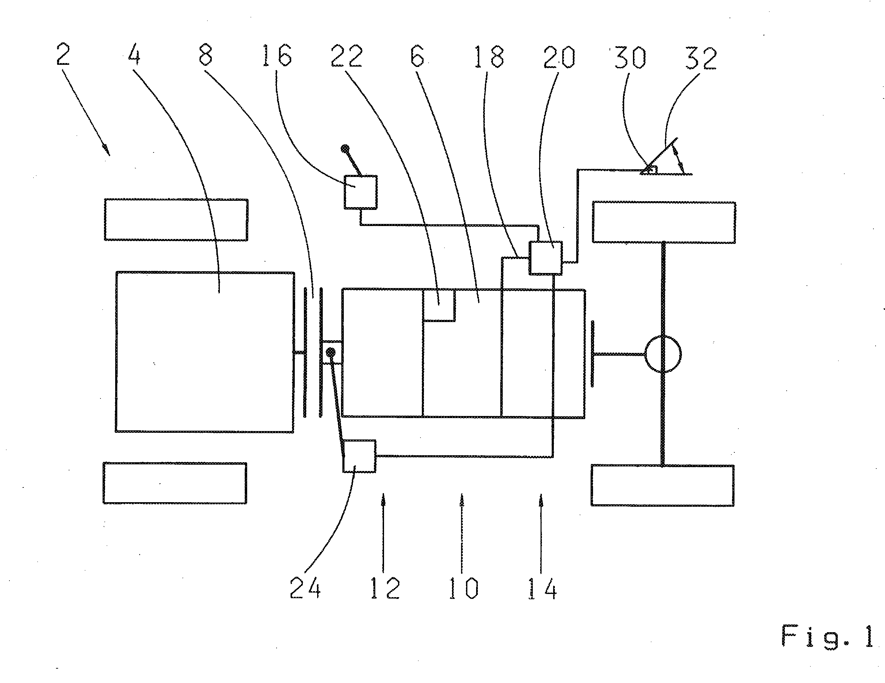

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Die Antriebsmaschine 4 kann beispielsweise als Verbrennungsmotor ausgebildet sein. Das Getriebe 6 ist über Verbindungsleitungen 18 mit einer elektronischen Steuereinrichtung 20 verbunden. Ein Fahrschalter 16 ist zur Abgabe von manuellen Eingriffen des Fahrzeugsführers vorgesehen und mit der Steuereinrichtung 20 verbunden. Die Steuereinrichtung 20 ist über eine weitere Verbindungsleitung mit einem Sensor 30 verbunden. Der Sensor 30 erfasst die Position eines von einem Fahrzeugführer manuell betätigten Fahr- bzw. Gaspedals 32. Die Fahr- bzw. Gaspedalposition wird der Steuereinrichtung 20 übermittelt. Das Getriebe 6 wird von einer Stelleinrichtung 22 automatisch geschaltet nach Signalen, die die Stelleinrichtung 22 von der Steuereinrichtung 20 erhält. Ebenfalls erhält ein Kupplungssteller 24 Signale von der Steuereinrichtung 20, wodurch die Kupplung 8 automatisch betätigt wird. Das Signal für die Position des Fahr- bzw. Gaspedals 32 und das Signal für die Stellung des Betätigungsmittels 28 werden hier über entsprechende Verbindungsleitungen an die Steuereinrichtung 20 übermittelt und dort ausgewertet.

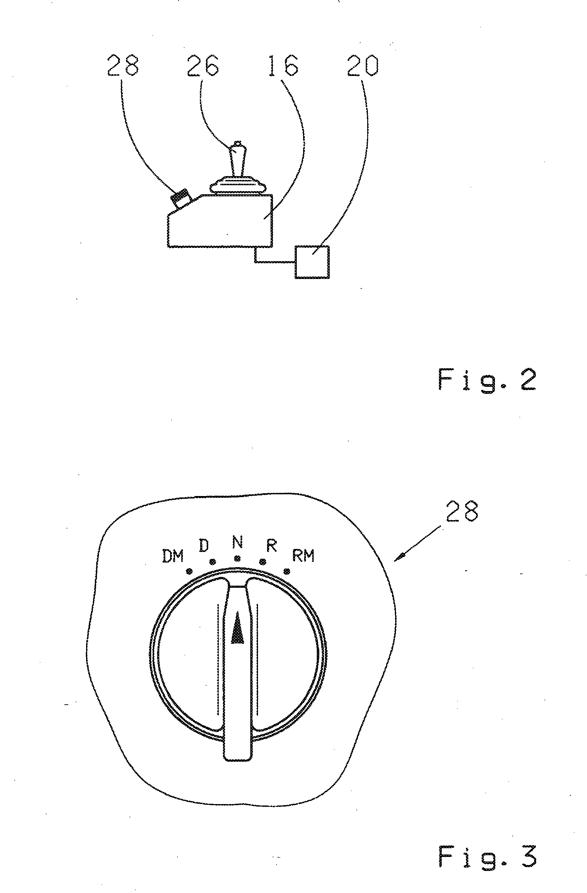

Die Fig. 2 zeigt den Fahrschalter 16, der einen Schalthebel 26 und ein Betätigungsmittel 28 aufweist, welches hier als Drehschalter ausgebildet ist. Der Fahrschalter 16 ist mit der Steuereinrichtung 20 verbunden. In der Fig. 3 ist der Drehschalter 28 näher dargestellt. Neben einer Neutralstellung "N" ist eine Stellung "R" für den Rückwärtsfahrbereich und eine Stellung "D" für den Vorwärtsfahrbereich vorgesehen. Die Stellung "RM" stellt eine Position des Drehschalters 28 dar, in der die Aktivierung eines Kriechmodus im Rückwärtsfahrbereich erfolgt und die folgerichtig von Neutral aus in Richtung der Stellung "R" vorgesehen ist. Die Stellung "DM" stellt eine Position des Drehschalters 28 dar, in der die Aktivierung eines Kriechmodus im Vorwärtsfahrbereich erfolgt und die folgerichtig von Neutral aus in Richtung der Stellung "D" vorgesehen ist.

### Bezugszeichen

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Fahrschalter
- 18: Verbindungsleitung
- 20: Steuereinrichtung
- 22: Stelleinrichtung
- 24: Kupplungssteller
- 26: Schalthebel
- 28: Drehschalter
- 30: Sensor
- 32: Fahr- bzw. Gaspedal

## Patentansprüche

1. Verfahren zur Steuerung eines Kraftfahrzeugs (2) mit einem Automatgetriebe (6) und einer automatisierten Kupplung (8), mit einer Steuereinrichtung (20), einem Fahr- bzw. Gaspedal (32), einem Element (30) zum Bestimmen der Fahr- bzw. Gaspedalposition und einem Betätigungsmittel (28) zur Auswahl einer Betriebsart des Kraftfahrzeugs (2), **dadurch gekennzeichnet, dass** bei einer Betätigung des Betätigungsmittels (28), welche bei bereits betätigtem Fahr- bzw. Gaspedal (32) erfolgt, die Position des bereits betätigten Fahr- bzw. Gaspedals (32) überwacht bzw. ausgewertet wird und dass eine Ansteuerung der Kupplung (8) solange verhindert wird, bis eine Änderung der Fahr- bzw. Gaspedalposition erkannt wird.

2. Verfahren nach Anspruch 1, **dadurch gekennzeichnet, dass** bei einer Betätigung des Betätigungsmittels (28) von der Betriebsart "Rangieren" bzw. "Kriechen" in die Betriebsart "Fahren" die Kupplung (8) erst dann weiter geschlossen wird, wenn durch das Element (30), welches die Fahr- bzw. Gaspedalposition erfasst, eine Änderung der Fahr- bzw. Gaspedalposition festgestellt wird.

3. Verfahren nach Anspruch 1, **dadurch gekennzeichnet, dass** bei einer Betätigung des Betätigungsmittels (28) von der Betriebsart "Fahren" in die Betriebsart "Rangieren" bzw. "Kriechen" die Kupplung (8) erst dann weiter geöffnet wird, wenn durch das Element (30), welches die Fahr- bzw. Gaspedalposition erfasst, eine Änderung der Fahr- bzw. Gaspedalposition festgestellt wird.

4. Verfahren nach Anspruch 1, **dadurch gekennzeichnet, dass** beim Einlegen eines Ganges aus der Neutralposition heraus, also bei einer Betätigung des Betätigungsmittels (28) von der Betriebsart "Neutral" in die Betriebsart "Fahren" oder "Rangieren" bzw. "Kriechen", die Kupplung (8) erst dann angesteuert und somit weiter geschlossen wird, wenn durch das Element (30), welches die Fahr- bzw. Gaspedalposition erfasst, eine Änderung der Fahr- bzw. Gaspedalposition festgestellt wird.

5. Verfahren nach wenigstens einem der Ansprüche 1 bis 4, **dadurch gekennzeichnet, dass** das Signal für die Position des Fahr- bzw. Gaspedals (32) und das Signal für die Stellung des Betätigungsmittels (28) an die Steuereinrichtung (20) übermittelt und dort ausgewertet werden.

6. Verfahren nach wenigstens einem der Ansprüche 1 bis 5, **dadurch gekennzeichnet, dass** das Element (30) zum Bestimmen der Fahr- bzw. Gaspedalposition als ein am Fahrpedal (32) angeordneter Sensor ausgebildet ist.

7. Verfahren nach wenigstens einem der vorangegangenen Ansprüche, **dadurch gekennzeichnet, dass** das Betätigungsmittel (28) zur Auswahl einer Betriebsart des Kraftfahrzeugs (2) als ein Drehschalter ausgebildet ist, welcher beispielsweise an einem Fahrschalter (16) des Kraftfahrzeugs (2) angeordnet ist.

## Claims

1. Method for controlling a motor vehicle (2) having an automatic transmission (6) and having an automated clutch (8), having a control device (20), having an accelerator or throttle pedal (32), having an element (30) for determining the accelerator or throttle pedal position, and having an actuation means (28) for selecting an operating mode of the motor vehicle (2), **characterized in that**, if an actuation of the actuation means (28) takes place while the accelerator or throttle pedal (32) is already actuated, the position of the already actuated accelerator or throttle pedal (32) is monitored or evaluated, and **in that** an activation of the clutch (8) is prevented until a change in the accelerator or throttle pedal position is detected.

2. Method according to Claim 1, **characterized in that**, if the actuation means (28) is actuated from the operating mode "manoeuvring" or "creeping" into the operating mode "driving", the clutch (8) is closed further only when a change in the accelerator or throttle pedal position is detected by means of the element (30) that detects the accelerator or throttle pedal position.

3. Method according to Claim 1, **characterized in that**, if the actuation means (28) is actuated from the operating mode "driving" into the operating mode "manoeuvring" or "creeping", the clutch (8) is opened further only when a change in the accelerator or throttle pedal position is detected by means of the element (30) that detects the accelerator or throttle pedal position.

4. Method according Claim 1, **characterized in that**, if a gear is engaged proceeding from the neutral position, that is to say if the actuation means (28) is actuated from the operating mode "neutral" into the operating mode "driving" or the operating mode "manoeuvring" or "creeping", the clutch (8) is actuated, and thus closed further, only when a change in the accelerator or throttle pedal position is detected by means of the element (30) that detects the accelerator or throttle pedal position.

5. Method according to at least one of Claims 1 to 4, **characterized in that** the signal for the position of the accelerator or throttle pedal (32) and the signal for the position of the actuation means (28) are transmitted to the control device (20) and evaluated therein.

6. Method according to at least one of Claims 1 to 5, **characterized in that** the element (30) for determining the accelerator or throttle pedal position is in the form of a sensor arranged on the accelerator pedal (32).

7. Method according to at least one of the preceding claims, **characterized in that** the actuation means (28) for the selection of an operating mode of the motor vehicle (2) is in the form of a rotary switch which is arranged for example at a driving switch (16) of the motor vehicle (2).

## Revendications

1. Procédé de commande d'un véhicule automobile (2) doté d'une transmission automatique (6) et d'un embrayage (8) automatisé, d'un dispositif de commande (20), d'une pédale d'accélération ou de gaz (32), d'un élément (30) qui détermine la position de la pédale d'accélération ou de gaz et d'un moyen d'actionnement (28) qui sélectionne les modes de conduite du véhicule automobile (2),
**caractérisé en ce que**
la position de la pédale d'accélération ou de gaz (32) déjà actionnée est surveillée ou évaluée au cas où un actionnement du moyen d'actionnement (28) lieu lorsque la pédale d'accélération ou de gaz (32) a déjà été actionnée et
**en ce que** la commande de l'embrayage (8) est bloquée jusqu'à ce qu'une modification de la position de la pédale d'accélération ou de gaz ait été détectée.

2. Procédé selon la revendication 1, **caractérisé en ce qu'**en cas d'actionnement du moyen d'actionnement (28) du mode de fonctionnement "stationnement" ou "en prise" au mode de fonctionnement "roulage", l'embrayage (8) n'est refermé que si l'élément (30) qui détecte la position de la pédale d'accélération ou de gaz a constaté une modification de la position de la pédale d'accélération ou de gaz.

3. Procédé selon la revendication 1, **caractérisé en ce qu'**en cas d'actionnement du moyen d'actionnement (28) du mode de fonctionnement "roulage" aux modes de fonctionnement "stationnement" ou "en prise", l'embrayage (8) n'est rouvert que si l'élément (30) qui détecte la position de la pédale d'accélération ou de gaz a constaté une modification de la position de la pédale d'accélération ou de gaz.

4. Procédé selon la revendication 1, **caractérisé en ce que** lorsqu'un rapport de transmission a été engagé depuis la position neutre et donc lors de l'actionnement du moyen d'actionnement (28) du mode de fonctionnement "neutre" aux modes de fonctionnement "roulage", "stationnement" ou "en prise", l'embrayage (8) n'est commandé et donc refermé que si l'élément (30) qui détecte la position de la pédale d'accélération ou de gaz a constaté une modification de la position de la pédale d'accélération ou de gaz.

5. Procédé selon au moins l'une des revendications 1 à 4, **caractérisé en ce que** le signal de position de la pédale d'accélération ou de gaz (32) et le signal de position du moyen d'actionnement (28) sont transmis au dispositif de commande (20) pour y être évalués.

6. Procédé selon au moins l'une des revendications 1 à 5, **caractérisé en ce que** l'élément (30) qui détermine la position de la pédale d'accélération ou de gaz est configuré comme capteur disposé sur la pédale d'accélération (32).

7. Procédé selon au moins l'une des revendications précédentes, **caractérisé en ce que** le moyen d'actionnement (28) est configuré comme commutateur rotatif de sélection des modes de conduite du véhicule automobile (2), disposé par exemple sur le commutateur d'allumage (16) du véhicule automobile (2).
